(19) Europäisches Patentamt
European Patent Office
Office européen des brevets

(11) Veröffentlichungsnummer: **0 061 640**
**B1**

# (12) EUROPÄISCHE PATENTSCHRIFT

(45) Veröffentlichungstag der Patentschrift: **12.12.84**

(51) Int. Cl.³: **C 08 G 63/68**, C 08 G 79/04

(21) Anmeldenummer: **82102072.4**

(22) Anmeldetag: **15.03.82**

(54) **Verfahren zur Herstellung von thermoplastischen, aromatischen Polyphosphonaten mit geringen Anteilen an Carbonatstrukturen.**

(30) Priorität: **25.03.81 DE 3111653**

(43) Veröffentlichungstag der Anmeldung: **06.10.82 Patentblatt 82/40**

(45) Bekanntmachung des Hinweises auf die Patenterteilung: **12.12.84 Patentblatt 84/50**

(84) Benannte Vertragsstaaten: **DE FR GB IT**

(56) Entgegenhaltungen:
**EP-A-0 021 216**
**EP-A-0 033 826**

(73) Patentinhaber: **BAYER AG, Konzernverwaltung RP Patentabteilung, D-5090 Leverkusen 1 Bayerwerk (DE)**

(72) Erfinder: **Schmidt, Manfred, Dr., Bodelschwinghstrasse 20, D-4150 Krefeld 1 (DE)**
Erfinder: **Bottenbruch, Ludwig, Dr., Woehlerstrasse 5, D-4150 Krefeld 1 (DE)**
Erfinder: **Freitag, Dieter, Dr., Hasenheide 10, D-4150 Krefeld 1 (DE)**

EP 0 061 640 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

**Beschreibung**

Gegenstand der vorliegenden Erfindung ist ein Verfahren zur Herstellung von Polyphosphonaten mit Carbonatstrukturen in Mengen von 0,3 bis 4,5 Mol-%, vorzugsweise von 0,5 bis 2,5 Mol-%, bezogen auf die Summe an Phosphonat- und Carbonat-Struktureinheiten, das dadurch gekennzeichnet ist, daß man in Gegenwart neutraler Umesterungskatalysatoren Diphenole mit Phosphonsäurediarylester im Molverhältnis von 1,03 bis 0,97 bei Temperaturen von 230 bis 320°C, insbesondere von 250 bis 320°C, umsetzt und bei einem von 500 auf nicht weniger als 2 mbar, insbesondere von 400 auf nicht weniger als 5 mbar, absinkenden Druck die flüchtigen Monohydroxyaryle innerhalb von 1,5 bis 2,5 h abdestilliert, und danach durch Zugabe von Diarylcarbonat in Mengen von 0,5 Mol-% bis 8,5 Mol-%, vorzugsweise 1 Mol-% bis 4,9 Mol-%, bezogen auf molare Summe aus eingesetztem Phosphonsäurediarylester und Diarylcarbonat, bei Temperaturen von 250 bis 320°C, insbesondere von 280 bis 320°C, und einem von 300 auf nicht weniger als 1 mbar bis 0,2 mbar absinkenden Druck die Reaktion innerhalb von 1 bis 2 h vervollständigt.

Gegenstand der vorliegenden Erfindung sind auch die nach dem erfindungsgemäßen Verfahren erhältlichen Polyphosphonate.

Das molare Verhältnis von einzusetzendem Phosphonsäurediarylester zu Diarylcarbonat beträgt von 99,5 bis 91,5 Mol-% zu 0,5 bis 8,5 Mol-%, vorzugsweise von 99 bis 95,1 Mol-% zu 1 bis 4,9 Mol-%, bezogen jeweils auf die molare Summe aus Phosphonsäurediarylester und Diarylcarbonat.

Das Molverhältnis der Diphenole zu der Summe der Phosphonsäurediarylester und Diarylcarbonate liegt jeweils zwischen 0,91 und 0,99, vorzugsweise zwischen 0,93 und 0,97.

Die Menge an neutralen Umesterungskatalysatoren liegt jeweils zwischen $10^{-7}$ bis $10^{-1}$ Mol-%, vorzugsweise $7 \cdot 10^{-6}$ bis $8 \cdot 10^{-2}$ Mol-%, bezogen auf Mole an eingesetzten Diphenolen.

Als Umesterungskatalysatoren dienen $C_1$—$C_{18}$-Tetraalkyltitanate, $C_2$—$C_4$-Dialkylzinnoxide, $C_2$—$C_4$-Dialkyl-$C_1$—$C_4$-dialkoxy-zinnverbindungen, $C_3$—$C_{18}$-Tetraalkylzirkonate, $C_2$—$C_{18}$-Trialkylvanadylate, Zinkacetat, Tributylzinnacetat, oder mindestens einer aus der vorstehenden Gruppe im Gemisch mit Germaniumdioxid und/oder Titandioxid.

Das erfindungsgemäße Verfahren zur Herstellung von Polyphosphonaten mit geringen Anteilen an Carbonatstrukturen besitzt gegenüber der analogen Herstellung von reinen Polyphosphonaten ohne Carbonatstruktureinheiten gemäß der deutschen Patentanmeldung P 2 925 207.1 und gemäß der deutschen Patentanmeldung P 2 944 093.5 den Vorteil der höheren Reaktionsgeschwindigkeit.

Gegenüber den Polyphosphonatocarbonaten mit höheren Carbonatstruktureinheiten gemäß der deutschen Patentanmeldung P 2 925 208.2 (EP-A-0 021 216) gemäß der deutschen Patentanmeldung P 3 001 863.4 (EP-A-0 033 826) besitzen die erfindungsgemäß erhältlichen Polyphosphonate mit geringen Carbonatstruktureinheiten noch das ausgeprägte Eigenschaftsbild der Polyphosphonate.

Gegenüber den mit alkalischen Verbindungen als Umesterungskatalysatoren erhaltenen Polyphosphonaten bzw. Polyphosphonatocarbonaten (gemäß deutscher Patentanmeldung P 2 925 207.1 (Le A 19 491) und gemäß deutscher Patentanmeldung P 2 925 208.2 (EP-A-0 021 216)) besitzen die erfindungsgemäß erhältlichen Polyphosphonatocarbonate außerdem die bessere thermische Alterungsbeständigkeit.

Erfindungsgemäß geeignete neutrale Umesterungskatalysatoren sind.:

a) $C_1$—$C_{18}$-Tetraalkyltitanate wie beispielsweise
Titan-tetraethylat, Titan-tetrapropylat, Titan-tetraisopropylat, Titan-tetrabutylat, Titan-tetraoctonat, Titan-tetrastearat,
b) $C_2$—$C_4$-Dialkylzinnoxide wie beispielsweise
Di-isopropylzinnoxid, Dibutylzinnoxid,
c) $C_2$—$C_4$-Dialkyl-$C_1$—$C_4$-dialkoxy-zinnverbindungen wie beispielsweise
Diisopropyl-dimethoxy-zinn, Dibutyl-diisopropoxy-zinn, Dibutyl-dimethoxy-zinn,
d) $C_3$—$C_{18}$-Tetraalkylzirkonate wie beispielsweise
Zirkon-tetraacetylacetonat, Zirkontetrabutylat, Zirkontetraoctonat, Zirkontetrastearat,
e) $C_2$—$C_{18}$-Trialkylvanadylate wie beispielsweise
Vanadyl-ethylat, VO $(OC_2H_5)_3$, Vanadyl-isopropylat, VO $(O{-}i{-}C_3H_7)_3$, Vanadyl-n-butylat, VO $(O{-}n{-}C_4H_9)_3$,
f) Zinkacetat oder Tributylzinnacetat sowie
g) Gemische aus Germaniumdioxid oder Titandioxid mit mindestens einem der unter a) bis f) aufgeführten Katalysatoren.

Die gemäß g) einsetzbaren Katalysatorkombinationen liegen im Gewichtsverhältnis 1 : 3 bis 3 : 1 vor.

Die nach dem erfindungsgemäßen Verfahren hergestellten thermoplastischen aromatischen Polyphosphonatocarbonate mit mittleren Molekulargewichten (Zahlenmittel $\overline{M}_n$) von mindestens 11 000, vorzugsweise von 11 000 bis 200 000 und insbesondere von 20 000 bis 80 000 entsprechen der Formel (1)

$$E{-}O{-}X{-}O{+}M{-}O{-}X{-}O{+}_n E \qquad (1)$$

worin

E —M—O—Ar ist, wobei Ar ein Arylrest mit vorzugsweise 6 bis 14 C-Atomen, insbesondere Phenyl, $C_1$—$C_4$-alkylsubstituiertes Phenyl und/oder halogensubstituiertes (Halogen = F, Cl, Br) Phenyl ist,

M das Bindeglied

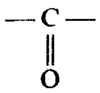 oder 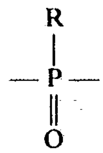

ist, wobei das molare Verhältnis der Bindeglieder

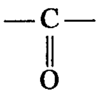 und 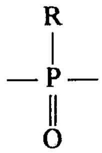

im Mittel jeweils zwischen 4,5 : 95,5 und 0,3 : 99,7, vorzugsweise zwischen 2,5 : 97,5 und 0,5 : 99,5, liegt und R = mindestens einen der Reste:

$C_1$—$C_{12}$-Alkyl,

$C_2$—$C_{12}$-Alkenyl,

$C_6$—$C_{30}$-Cycloalkyl, $C_6$—$C_{30}$-Cycloalkenyl, $C_6$—$C_{30}$-Aryl, $C_7$—$C_{30}$-Arylalkyl oder $C_8$—$C_{30}$-Arylalkenyl, wobei die jeweilige Arylgruppe nicht substituiert oder durch 1 bis 5 $C_1$—$C_4$-Alkylgruppen oder durch 1 bis 5 Halogenatome (wie beispielsweise F, Cl oder Br) oder durch die genannten Alkylgruppen und Halogenatome substituiert ist;

X der Rest eines Diphenols ist und bedeuten kann:

Phenylen 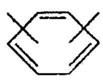

Biphenylen 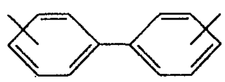

$C_2$—$C_4$-Alkylenbisphenylen 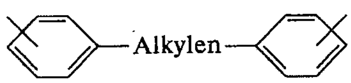

$C_1$—$C_5$-Alkylidenbisphenylen 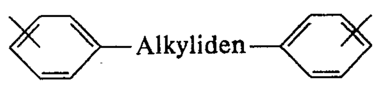

$C_5$—$C_{12}$-Cycloalkylenbisphenylen 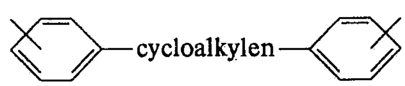

$C_5$—$C_{12}$-Cycloalkylidenbisphenylen 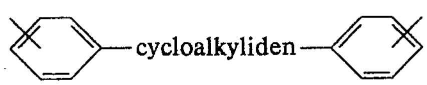

Thiobisphenylen 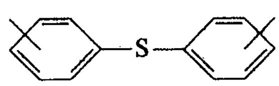

Oxibisphenylen 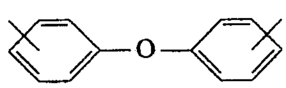

Sulfonylbisphenylen 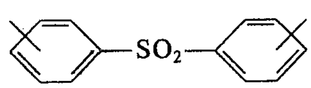

Carbonylbisphenylen 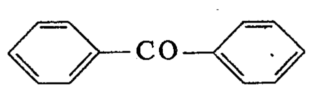

Naphthylen 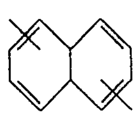

wobei jeder Phenylenkern unsubstituiert oder durch 1 bis 4 $C_1$—$C_4$-Alkylgruppen oder durch 1 bis 4 Halogenatome (F, Cl oder Br) oder durch die genannten Alkylgruppen und Halogenatome und der Naphthylenkern unsubstituiert oder durch 1 bis 6 mindestens einer der genannten Gruppen oder Halogenatome substituiert ist;

n der mittlere Polymerisationsgrad ist, der aus den jeweiligen Molekulargewichten $\overline{M}_n$ (Zahlenmittel) von mindestens 11 000, vorzugsweise 11 000 bis 200 000 und insbesondere 20 000 bis 80 000, der Polyphosphonatocarbonate resultiert.

Die erfindungsgemäß erhältlichen Polyphosphonatocarbonate können jeweils sowohl aus einheitlichen Diphenolresten X als auch aus verschiedenen, also 2 oder mehr als 2 verschiedenen Diphenolresten X, aufgebaut sein. Vorzugsweise haben vorstehende Definitionen folgende Bedeutung:

R = mindestens einen der Reste Methyl oder Phenyl, insbesondere Methyl,
X = mindestens einen der Reste Phenylen, Biphenylen, $C_2$—$C_4$-Alkylenbisphenylen, $C_1$—$C_5$-Alkylidenbisphenylen, wobei jeder Phenylenkern durch 1 bis 4 Methylgruppen substituiert sein kann, Cyclohexylenbisphenylen, Cyclohexylidenbisphenylen, Thiobisphenylen, Sulfonylbisphenylen; insbesondere $C_1$—$C_4$-Alkylidenbisphenylen, wobei jeder Phenylenkern durch ein oder zwei Methylgruppen substituiert sein kann,
Ar = Phenyl oder p-Toluol.

Erfindungsgemäß geeignete Phosphonsäurediarylester sind solche der Formel (2)

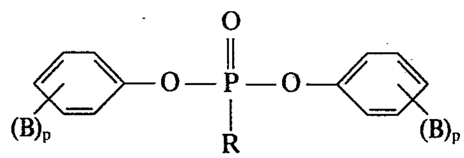

(2)

wobei

R die für die Verbindungen der Formel (1) genannte Bedeutung hat,
B eine $C_1$—$C_4$-Alkylgruppe und/oder F, Cl oder Br und
p 0 oder eine ganze Zahl von 1 bis 5 sind.

Besonders bevorzugt werden halogenfreie Alkyl- und Arylphosphonsäurediphenylester; insbesondere bevorzugt werden Methylphosphonsäurediphenylester und Phenylphosphonsäurediphenylester. Weitere Beispiele für erfindungsgemäß geeignete Phosphonsäurediarylester sind

Cyclohexylphosphonsäurediphenylester,
Ethylphosphonsäurediphenylester,
2-Phenyl-ethylenphosphonsäurediphenylester,
Butylphosphonsäurediphenylester und
Isopropylphosphonsäurediphenylester.

Bevorzugte Diphenole entsprechen den Formeln (3) und (4)

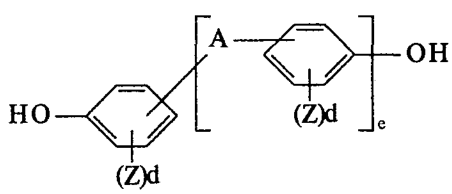

(3)

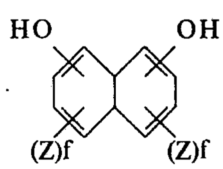

(4)

in denen

A eine Einfachbildung, eine Alkylengruppe mit 2 bis 4 C-Atomen, eine Alkylidengruppe mit 1 bis 5 C-Atomen, eine Cycloalkylengruppe mit 5 oder 6 C-Atomen, eine Cycloalkylidengruppe mit 5 bis 6 C-Atomen, eine Sulfonylgruppe, eine Carbonylgruppe, Sauerstoff oder Schwefel,

e die Zahl 0 oder 1,
Z F, Cl, Br oder $C_1-C_4$-Alkyl bedeutet und mehrere Z in einem Arylrest gleich oder verschieden sind,
d die ganzen Zahlen 0 oder 1 bis 4,
f die ganzen Zahlen 0 oder 1 bis 3 bedeuten.

Besonders bevorzugt sind Verbindungen der Formel (3), in denen e = 1 und A eine Einfachbindung, den Isopropylidenrest, die $SO_2$-Gruppe oder Schwefel sowie d = null bedeuten, insbesondere jedoch

4,4'-Dihydroxydiphenyl,
2,2-Bis-(4-hydroxyphenyl)-propan (= Bisphenol A) und
4,4'-Dihydroxydiphenylsulfon.

Erfindungsgemäß geeignete Diarylcarbonate entsprechen der Formel (5)

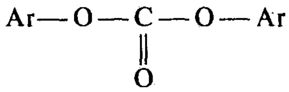 (5)

worin

Ar die für die Formel (1) genannte Bedeutung hat und bevorzugt

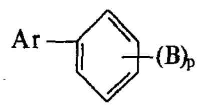

ist, mit B und p entsprechend der Bedeutung für Formel (2).

Bevorzugt geeignet sind beispielsweise Diphenylcarbonat oder Di-(p-toluyl)-carbonat. Insbesondere wird Diphenylcarbonat bevorzugt.

Die nach dem erfindungsgemäßen Verfahren erhaltenen hochmolekularen thermoplastischen aromatischen Polyphosphonatocarbonate können durch den Einbau geringer Mengen, vorzugsweise von Mengen zwischen 0,05 und 3,0 Mol-% (bezogen auf 100 Mol-% eingesetzter Diphenole) an drei- oder mehr als dreifunktionellen Verbindungen, beispielsweise solchen mit 3 oder mehr als 3 phenolischen Hydroxygruppen verzweigt sein. Als dreifunktionelle Verzweigungskomponente können ebenfalls Triarylphosphate wie beispielsweise Triphenylphosphat in Mengen zwischen 0,05 und 3,0 Mol-% (bezogen auf 100 Mol-% des eingesetzten Gemisches aus Diarylcarbonat und Phosphonsäurediarylester) einkondensiert werden, wodurch das resultierende aromatische Polyphosphonatocarbonat durch Phosphorsäureestergruppen verzweigt wird.

Einige der verwendbaren verzweigenden phenolischen Verbindungen mit 3 oder mehr als 3 phenolischen Hydroxygruppen sind beispielsweise Phloroglucin; 4,6-Dimethyl-2,4,6-tri-(4-hydroxy-phenyl)-hepten-2; 4,6-Dimethyl-2,4,6-tri-(4-hydroxy-phenyl)-heptan; 1,3,5-Tri-(4-hydroxyphenyl)-benzol; 1,1,1-Tri-(4-hydroxyphenyl)-ethan; Tri-(4-(hydroxy-phenyl)-phenylmethan; 2,2-Bis-[4,4-bis-(4-hydroxy-phenyl)-cyclohexyl]-propan; 2,4-Bis-(4-hydroxyphenyl-isopropyl)-phenol; 2,6-Bis-(2-hydroxy-5'-methyl-benzyl)-4-methylphenol; 2-(4-Hydroxyphenyl)-2-(2,4-dihydroxyphenyl)-propan und 1,4-Bis-(4,4''-dihydroxytriphenyl-methyl)-benzol.

Als Verzweiger lassen sich aber auch Trimesinsäuretriphenylester und Triphenylcyanurat verwenden.

Alle für die Umesterung eingesetzten Ausgangsmaterialien sollen Reinheitsgrade von $>$99,1 Gew.-%, vorzugsweise $>$99,6 Gew.-%, besitzen.

Die Durchführung des erfindungsgemäßen Verfahrens erfolgt im einzelnen beispielsweise folgendermaßen:

Phosphonsäurediarylester und gegebenenfalls verzweigende Ester wie Triphenyltrimesat werden mit den aromatischen Dihydroxyverbindungen und gegebenenfalls den verzweigenden Tri- oder Tetrahydroxy-verbindungen in sauerstofffreier Atmosphäre, d. h. in Gegenwart eines Inertgases wie beispielsweise Stickstoff oder Kohlendioxid, und in Gegenwart der genannten neutralen Katalysatoren bei Temperaturen zwischen 230 und 320°C, insbesondere zwischen 250 und 320°C zur Reaktion gebracht, wobei unter intensivem Rühren die flüchtigen Monohydroxyaryle bei einem von 500 mbar auf nicht weniger als 2 mbar, insbesondere einem von 400 mbar auf nicht weniger als 5 mbar, absinkendem Druck innerhalb von 1,5 bis 2,5 h abdestilliert werden.

Durch Einleiten von Inertgas wird der Druck im Reaktionsgefäß auf 500 bis 300 mbar erhöht, die entsprechende Menge von 0,5 bis 8,5 Mol-% Diphenylcarbonat zugegeben und anschließend unter Abdestillieren der flüchtigen aromatischen Monohydroxiaryle sowie des überschüssigen Diphenylcarbonats oder überschüssigen Phosphonsäurediarylesters bei 250 bis 320°C, insbesondere bei 280 bis 320°C, und bei einem von 300 mbar auf nicht weniger als 1 mbar bis 0,2 mbar absinkendem Druck die Reaktion innerhalb von 1 bis 2 Stunden zu Ende geführt.

Nach Beendigung der Polykondensation wird die gebildete Schmelze des Polyphosphonatocarbonats in üblicher Weise in Granulate oder direkt in geformte Gebilde wie Filme, Fasern oder Borsten überführt. Die nach dem erfindungsgemäßen Verfahren erhaltenen Polyphosphonatocarbonate lassen sich im Schmelzfluß durch technisch gebräuchliche Verarbeitungsaggregate wie Extruder und Spritzgußmaschinen zu Formkörpern hoher Wärmeformbeständigkeit verarbeiten und zeigen unverändert eine ebenso hervorragende Brandwidrigkeit sowie ebenso gute mechanische Eigenschaften, wie sie die gemäß der deutschen Patentanmeldung P 2 944 093.5 hergestellten Polyphosphonate aufzeigen.

Die erfindungsgemäß erhältlichen Polyphosphonatocarbonate sind löslich in Methylenchlorid, 1,1,2,2-Tetrachlorethan, Chlorbenzol, 1,2-Dichlorbenzol, Chloroform, 1,1,2-Trichlorethylen, Dioxan und Hexamethylen-phosphortriamid (HMPT), mit Ausnahme der Polyphosphonatocarbonate der Struktur (1), in denen X der Thio-bis-phenylen-Rest ist.

Den erfindungsgemäß erhältlichen aromatischen Polyphosphonatocarbonaten können außerdem die für Polycarbonate üblichen Materialien wie Pigmente, antistatische Mittel, Formtrennmittel, thermische Stabilisatoren, Ultraviolettlichtstabilisatoren und/oder verstärkende Füllstoffe zugemischt werden.

Die erfindungsgemäßen thermoplastischen, aromatischen, vorzugsweise halogenfreien Polyphosphonate können überall dort Anwendung finden, wo thermoplastische Chemiewerkstoffe höchster Brandwidrigkeit benötigt werden, und wo zusätzlich bei Einwirkung sehr hoher Temperaturen eine Entwicklung toxischer Pyrolysegase vermieden werden soll. Derartige Anwendungsgebiete sind beispielsweise im Fahrzeugbau, im Flugzeugbau, auf dem Raumfahrtsektor oder auf dem Gebiet der Sicherheitstechnik zu finden.

Die erfindungsgemäß erhältlichen thermoplastischen aromatischen Polyphosphonatocarbonate können bei 240 bis 320°C extrudiert und zu Prüfkörpern ausgeformt werden.

Die Prüfung der Wärmeformbeständigkeit erfolgt durch Messung des Vicat-Erweichungspunktes VSP gemäß DIN 53 460 oder ISO/R 75. Die Prüfung des Verhaltens bei Schlagbeanspruchung erfolgte sowohl durch Messung der Schlagzähigkeit $a_n$ nach Charpy gemäß DIN 53 453 oder nach ASTM D 256 als auch durch Messung der Kerbschlagzähigkeit $a_k$ nach Charpy gemäß DIN 53 453 oder ASTM D 256. Die Härtemessung erfolgte durch Messung der Kugeldruckhärte HK gemäß DIN 53 456. Die Prüfung der mechanisch-elastischen Eigenschaften erfolgte durch Spannungs-Verformungsversuche wie durch Messung des Biege-E-Moduls gemäß DIN 53 457, durch Messung des Zug-E-Moduls gemäß DIN 53 457, durch Messung der Reißfestigkeit $\sigma_R$, der Reißdehnung $\varepsilon_R$, der Streckfestigkeit $\sigma_S$ und der Streckdehnung $\varepsilon_S$ gemäß DIN 53 455/1968 oder ASTM D 638.

Die Messung der relativen Lösungsviskositäten der erfindungsgemäßen Polyphosphonatocarbonate erfolgte in 0,5gew.-%iger Lösung in Methylenchlorid bei 25°C.

Die Prüfung des Brandverhaltens erfolgte sowohl durch Messung des $O_2$-Index gemäß ASTM D 2863-70 als auch durch Messung der Nachbrennzeit gemäß dem UL-Test (Subj. 94).

Hierbei werden Teststäbe mit den Abmessungen: 127 × 12,7 × 1,6 mm (1/16") und 127 × 12,7 × 3,2 mm (1/8") dem Testverfahren gemäß Underwriters Laboratories, Inc. Bulletin 94, Verbrennungstest zur Klassifizierung von Materialien, unterworfen.

Gemäß diesem Testverfahren wurden die so geprüften Materialien entweder mit UL-94 V-0, UL-94 V-I und UL-94 V-II klassifiziert, und zwar auf der Basis der mit den 10 Proben erhaltenen Ergebnisse. Die Kriterien für jede dieser V-Klassifizierungen gemäß UL-94 sind kurz wie folgt:

| | |
|---|---|
| UL-94 V-0 | Das durchschnittliche Flammen und/oder Glühen nach Entfernung der Zündflamme soll 5 Sekunden nicht überschreiten und keine der Proben soll Teilchen abtropfen, die absorbierende Baumwolle entzünden. |
| UL-94 V-I | Das durchschnittliche Flammen und/oder Glühen nach Entfernung der Zündflamme soll 25 Sekunden nicht überschreiten und keine der Proben soll Teilchen abtropfen, die absorbierende Baumwolle entzünden. |
| UL-94 V-II | Das durchschnittliche Flammen und/oder Glühen nach Entfernung der Zündflamme soll 25 Sekunden nicht überschreiten und die Proben tropfen flammende Teilchen ab, welche absorbierende Baumwolle entzünden. |

Weiterhin wurde ein Teststab, der mehr als 25 Sekunden nach Entfernung der Zündflamme brannte, nicht nach UL-94 klassifiziert, sondern derselbe wurde nach den Standardbedingungen der vorliegenden Erfindung als »brennt« bezeichnet. Die Vorschrift UL-94 erfordert weiterhin, daß alle Teststäbe eines Versuchs die jeweilige V-Bewertung erfüllen müssen, andernfalls erhalten die 10 Teststäbe die Bewertung des schlechtesten Einzelstabes. Wenn beispielsweise ein Stab mit UL-94 V-II bewertet wird und die anderen 9 Teststäbe mit UL-94 V-0 bewertet werden, dann erhalten alle 10 Stäbe die Bewertung UL-94 V-II.

## Beispiel 1

Polymethylphosphonat des 4,4'-Dihydroxydiphenyls mit 1,7 Mol-% Carbonatstrukturen

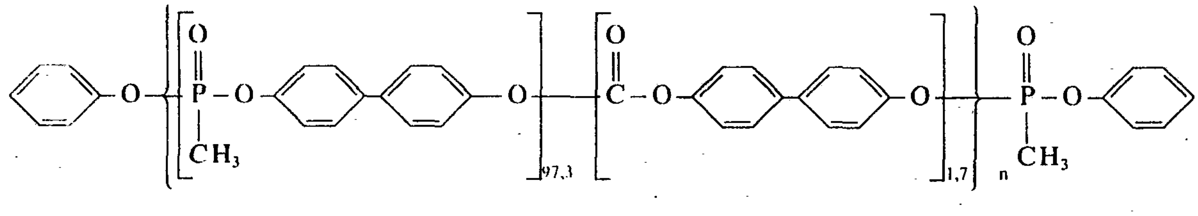

(n ~ 1.0)

4650 g (25 Mol ≙ 100 Mol-%) 4,4'-Dihydroxydiphenyl, 6325 g (25,5 Mol ≙ 102 Mol-%) Diphenylester der Methylphosphonsäure, 0,35 g ($7{,}53 \times 10^{-3}$ Gew.-% bezogen auf Gewicht 4,4'-Dihydroxydiphenyl) $Zn(OAc)_2$ ($7{,}6 \times 10^{-2}$ Mol-%) werden unter Stickstoff auf 285°C vorgeheizt. Unter $N_2$ werden anschließend bei 285 bis 295°C und einem von 290 auf 10 mm Hg absinkenden Druck innerhalb von 2,5 Stunden 87 bis 88% des Phenols über eine Kolonne abdestilliert. Man gibt 188 g (0,88 Mol ≙ 3,5 Mol-%) Diphenylcarbonat zu, läßt 5 Minuten bei 50 mm Hg Vakuum und 300°C reagieren und destilliert bei bis auf 7 mm Hg absinkendem Innendruck nochmals 8 bis 9% Phenol über die Kolonne ab. Anschließend wird die Kondensation bei 300 bis 312°C und 7 bis 0,5 mm Hg innerhalb von 1,5 Stunden beendet, wobei unter Umgehung der Kolonne nochmals ca. 4% Destillat anfallen. Das braunfarbene zähviskose Polymer besitzt eine relative Lösungsviskosität $\eta$ rel (gemessen bei 25°C in 0,5gew.-%iger Lösung in $CH_2Cl_2$) von 1,280. Die Glasübergangstemperatur $T_G$ beträgt 137°C (durch Differentialthermoanalyse bestimmt).

Der Gehalt an Carbonatstrukturen beträgt 1,7 Mol-% (bestimmt durch IR-Spektroskopie). Der Phosphorgehalt ist 12,4 Gew.-%.

## Beispiel 2

Polymethylphosphonat des Bis-2-(4-hydroxyphenyl)-propans mit 1,85 Mol-% Carbonatstruktureinheiten

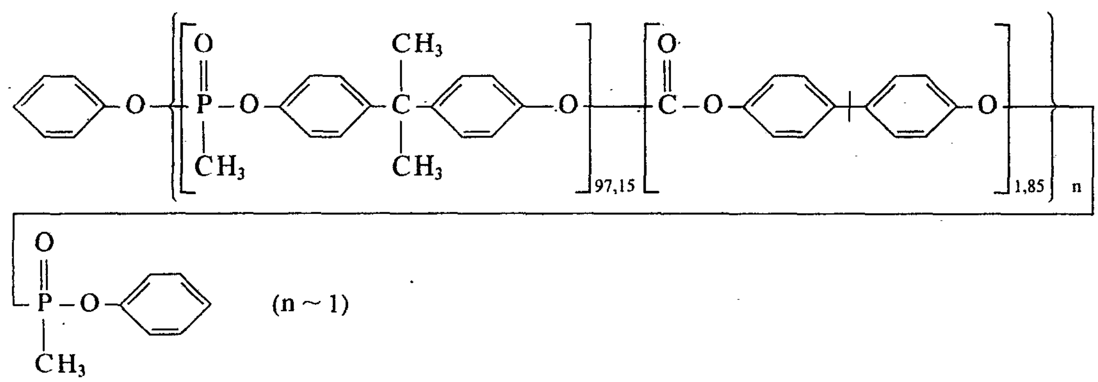

(n ~ 1)

5700 g (= 25 Mol ≙ 100 Mol-%) Bis-2-(4-hydroxyphenyl)-propan, 6280 g (= 25,32 Mol ≙ 101,3 Mol-%) Diphenylester der Methylphosphonsäure, 36,5 g ($8{,}33 \times 10^{-2}$ Mol ≙ 0,5 Mol-%) Triphenylester der Trimesinsäure, 0,35 g ($1{,}4 \times 10^{-2}$ Gew.-%, bezogen auf Bis-2-(4-hydroxyphenyl)-propan) $Zn(OAc)_2$ ($7{,}6 \times 10^{-2}$ Mol-%) werden unter Stickstoff auf 270°C vorgeheizt. Anschließend werden bei 270 bis 300°C und bei 300 bis 7 mm Hg Vakuum unter Stickstoff 98% des Phenols innerhalb von 2,5 Stunden über eine Kolonne abdestilliert. Man gibt 205 g (0,958 Mol ≙ 3,83 Mol-%) Diphenylcarbonat zu, läßt 5 Minuten bei 300°C und 60 mm Hg Innendruck reagieren und führt bei 300°C und einem auf 0,7 mm Hg absinkenden Innendruck innerhalb von 2 Stunden unter Abspaltung von weiteren 2% Destillat (Kolonne wird umgangen) die Kondensation zu Ende.

Das braunfarbene zähe Polymer besitzt eine relative Lösungsviskosität $\eta$ rel (gemessen bei 25°C in 0,5gew.-%iger Lösung in $CH_2Cl_2$) von 1,293. Die Glasübergangstemperatur beträgt 90°C (durch Differentialthermoanalyse bestimmt). Der Gehalt an Carbonatstrukturen beträgt 1,85 Mol-% (bestimmt durch IR-Spektroskopie). Der Phosphorgehalt beträgt 10,2 Gew.-%.

## Beispiel 3

Polyphenylphosphonat des 4,4'-Dihydroxydiphenyls
mit 2,1 Mol-% Carbonatstruktureinheiten

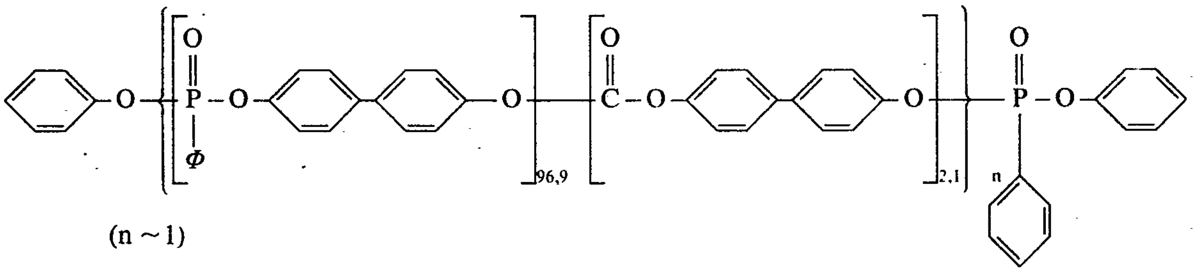

(n ~ 1)

4650 g (= 25 Mol ≙ 100 Mol-%) 4,4'-Dihydroxydiphenyl, 7850 g (= 25,32 Mol ≙ 101,3 Mol-%) Diphenylester der Phenylphosphonsäure, 0,2 g (1,3 × $10^{-2}$ Gew.-%, bezogen auf 4,4'-Dihydroxydiphenyl) $Zn(OAc)_2$ (4,3 × $10^{-2}$ Mol-%) werden unter Stickstoff auf 290°C vorgeheizt. Anschließend werden innerhalb von 2 Stunden bei 290 bis 310°C und 200 bis 7 mm Hg Innendruck unter Stickstoff 96% des Phenols über eine Kolonne abdestilliert. Man gibt 214 g (1,0 Mol ≙ 4 Mol-%) Diphenylcarbonat zu, läßt 5 Minuten bei 310°C und 60 mm Hg Innendruck reagieren und führt bei 310 bis 318°C und einem auf 0,5 mm Hg absinkenden Innendruck die Kondensation innerhalb von 1,5 Stunden zu Ende, wobei nochmals 4% Destillat (Kolonne wird umgangen) erhalten werden.

Das zähviskose amberfarbene Polymer besitzt eine relative Lösungsviskosität $\eta$rel (gemessen bei 25°C in 0,5gew.-%iger Lösung in $CH_2Cl_2$) von 1,266.

Die Glasübergangstemperatur $T_G$ beträt 147°C (durch Differentialthermoanalyse bestimmt). Der Gehalt an Carbonatstrukturen beträgt 2,1 Mol-% (bestimmt durch IR-Spektroskopie). Der Phosphorgehalt ist 9,85 Gew.-%.

## Beispiel 4

Polymethylphosphonat des 4,4'-Dihydroxydiphenyls
mit 0,3 Mol-% Carbonatstruktureinheiten

4650 g (100 Mol-%) 4,4'-Dihydroxydiphenyl, 6325 g (102 Mol-%) Diphenylester der Methylphosphonsäure und 0,35 g (7,53 × $10^{-3}$ Gew.-%, bezogen auf Gewicht, 4,4'-Dihydroxydiphenyl) Zinkacetat (7,6 × $10^{-2}$ Mol-%) werden unter $N_2$ auf 285°C vorgeheizt. Innerhalb von 2,5 Stunden werden bei 285 bis 295°C und bei 290 bis 10 mm Hg 87 bis 88% des Phenols abdestilliert.

Man gibt 26,86 g (0,126 Mol ≙ 0,5 Mol-%) Diphenylcarbonat zu, läßt 5 Minuten bei 50 mm Hg Druck und 300°C reagieren und destilliert bei bis auf 7 mm Hg absinkendem Innendruck nochmals 4 bis 6% Phenol ab. Anschließend wird die Kondensation bei 300 bi 312°C und 7 bis 0,5 mm Hg Innendruck innerhalb von 1,5 Stunden beendet, wobei unter Umgehung der Kolonne nochmals 12 bis 13% Destillat anfallen.

Das braunfarbene zähviskose Polymer besitzt eine relative Lösungsviskosität (gemessen bei 25°C in 0,5gew.-%iger Lösung in $CH_2Cl_2$) von 1,270; die Glasübergangstemperatur = 137°C (durch Differentialthermoanalyse bestimmt).

Der Gehalt an Carbonatstrukturen beträgt 0,3 Mol-% (bestimmt durch IR-Spektroskopie).

## Vergleich mit einem Polyphosphonat aus der deutschen Patentanmeldung P 2 925 207.1

Beispiel 1 aus P 2 925 207.1 (= Vergleichsbeispiel)

| | |
|---|---|
| 6204 g (25,02 Mol) | Methylphosphonsäurediphenylester |
| 4424 g (23,78 Mol) | 4,4'-Dihydroxydiphenyl, |
| 7,6 g (1,21 × $10^{-2}$ Mol) | 1,4-Bis-(4,4''-dihydroxytriphenylmethyl)-benzol und |
| 0,2 g (1,72 · $10^{-3}$ Mol) | Natriumphenolat |

werden unter Stickstoff bei 250°C intensiv in einem Autoklaven vermischt. Innerhalb von 3 Stunden wird unter einem von 250 auf 100 mbar absinkenden Druck und bei einer von 250 auf 265°C ansteigenden Temperatur Phenol über eine auf 100°C beheizte Kolonne abdestilliert. Anschließend wird die Umesterung 5 Stunden unter einem allmählich auf 0,3 mbar absinkenden Druck und einer auf 310°C ansteigenden Innentemperatur fortgesetzt, wobei die Viskosität der Schmelze ansteigt. Man belüftet den Autoklav mit Stickstoff, läßt das Polymer bei 300°C und bei stillstehendem Rührer 1 Stunde absit-

zen und isoliert das Produkt durch Abspinnen unter Druck (ca. 10 atm.) und Granulieren des Schmelzstranges. Man erhält 5,2 kg eines hochmolekularen amorphen Polyphosphonats mit einem Zahlenmittel-Molekulargewicht $\overline{M}_n$ = 27 600 und einer relativen Lösungsviskosität $\eta$ rel = 1,321 (gemessen bei 25°C in Methylenchlorid in 0,5gew.-%iger Lösung). P = 12,6 Gew.-%.

Brandwidrigkeitswerte und mechanische Prüfwerte dieses Polyphosphonats

| Prüfung | Prüfnorm | Prüfwert |
|---|---|---|
| $O_2$-Index<br>UL-Test (Subj. 94) | ASTM-D 2863-70 | 75%<br>VO (1/16")<br>Nachbrennzeit: 0 sec. |
| Vicat B | DIN 53 460 | 130°C |
| Schlagzähigkeit $a_n$ | DIN 53 453 | ungebrochen |
| Kerbschlagzähigkeit $a_k$ | DIN 53 453 | 32 |
| Kugeldruckhärte HK | DIN 53 456 | 102 MPa |
| Biege-E-Modul | DIN 53 457 | 2610 MPa |
| Biegefestigkeit | DIN 53 457 | 59 MPa |
| Zug-E-Modul | DIN 53 457 | 2420 MPa |
| Streckfestigkeit $\sigma_S$ | DIN 53 455 (1968) | 56 MPa |
| Streckdehnung $\varepsilon_S$ | DIN 53 455 | 8% |
| Reißfestigkeit $\sigma_R$ | DIN 53 455 | 44 MPa |
| Reißdehnung $\varepsilon_R$ | DIN 53 455 | 21% |

Für das erfindungsgemäße Polymethylphosphonat des Beispiels 1 der vorliegenden Patentanmeldung gelten die gleichen Werte für Brandwidrigkeit und Mechanik. Die Polyphosphonatocarbonate der vorliegenden Erfindung besitzen jedoch eine wesentlich bessere thermische Alterungsbeständigkeit als diejenigen gemäß P 2 925 207.1 hergestellten, wie folgender Vergleich zeigt:

Aus dem Polyphosphonatocarbonat des Beispiels 1 der vorliegenden Patentanmeldung mit dem Polyphosphonat aus obigem Vergleichsbeispiel werden aus Methylenchlorid Folien einer Schichtdicke von 50 µm hergestellt und bei 100°C an Luft während 7 Tagen getempert.

Die nachfolgende Tabelle faßt die erhaltenen Erebnisse dieses Temperaturalterungsversuchs zusammen, wobei der durch die Temperaturalterung verursachte Molekulargewichtsabbau anhand der relativen Lösungsviskositäten verifiziert wird, die in 0,5gew.-%igen Lösungen in Methylenchlorid bei 25°C bestimmt werden.

Tabelle

| Zeitdifferenz | erfindungsgemäßes Beispiel 1 | Vergleichsbeispiel |
|---|---|---|
| | η rel | η rel |
| 0 | 1,280 | 1,321 |
| 2 Tage | 1,280 | 1,305 |
| 4 Tage | 1,281 | 1,291 |
| 5 Tage | 1,279 | 1,280 |
| 7 Tage | 1,280 | 1,265 |

**Patentansprüche**

1. Verfahren zur Herstellung von Polyphosphonaten mit Carbonatstrukturen in Mengen von 0,3 bis 4,5 Mol-%, bezogen auf die Summe an Phosphonat- und Carbonat-Struktureinheiten, das dadurch gekennzeichnet ist,
daß man in Gegenwart neutraler Umesterungskatalysatoren Diphenole mit Phosphonsäurediarylestern im Molverhältnis von 1,03 bis 0,97 bei Temperaturen von 230 bis 320°C umsetzt und bei einem von 500 auf nicht weniger als 2 mbar absinkenden Druck die flüchtigen Monohydroxyaryle innerhalb von 1,5 bis 2,5 Stunden abdestilliert und
danach durch Zugabe von Diarylcarbonat in Mengen von 0,5 Mol-%bis 8,5 Mol-%, bezogen auf molare Summe aus eingesetztem Phosphonsäurediarylester und Diarylcarbonat, bei Temperaturen von 250 bis 320°C und einem von 300 auf nicht weniger als 1 mbar bis 0,2 mbar absinkenden Druck die Reaktion innerhalb von 1 bis 2 Stunden vervollständigt.

2. Verfahren zur Herstellung von Polyphosphonaten mit Carbonatstrukturen in Mengen von 0,5 bis 2,5 Mol-%, bezogen auf die Summe an Phosphonat- und Carbonat-struktureinheiten gemäß Anspruch 1, dadurch gekennzeichnet, daß man durch Zugabe von 1 Mol-%bis 4,9 Mol-%Diarylcarbonat, bezogen auf molare Summe aus eingesetztem Phosphonsäurediarylester und Diarylcarbonat, die Reaktion vervollständigt.

3. Polyphosphonate erhältlich gemäß dem Verfahren der Ansprüche 1 und 2.

**Claims**

1. Process for the preparation of polyphosphonates containing carbonate structures in quantities of 0.3 to 4.5 mol-%, relative to the sum of phosphonate and carbonate structural units, which is characterised in that diphenols are reacted with phosphonic acid diaryl esters in a molar ratio of 1.03 to 0.97, in the presence of neutral transesterification catalysts, at temperatures of 230 to 320°C, and the volatile monohydroxyaryls are distilled off over a period of 1.5 to 2.5 hours, at a pressure falling from 500 to not less than 2 mbars, and then the reaction is completed over a period of 1 to 2 hours by adding diaryl carbonate in quantities of 0.5 mol-%to 8.5 mol-%, relative to the molar sum of phosphonic acid diaryl ester and diaryl carbonate used, at temperatures of 250 to 320°C and at a pressure falling from 300 to not less than 1 mbar to 0.2 mbar.

2. Process for the preparation of polyphosphonates containing carbonate structures in quantities of 0.5 to 2.5 mol-%, relative to the sum of phosphonate and carbonate structural units according to Claim 1, characterised in that the reaction is completed by adding 1 mol-%to 4.9 mol-%of diaryl carbonate, relative to the molar sum of phosphonic acid diaryl ester and diaryl carbonate used.

3. Polyphosphonates obtainable according to the process of Claims 1 and 2.

**Revendications**

1. Procédé de préparation de polyphosphonates comportant des structures carbonates en des quantités de 0,3 à 4,5 moles-%, par rapport à la somme des motifs structurels phosphonates est carbonates, procédé caractérisé en ce que l'on fait réagir, en présence de catalyseurs neutres de transestérification, des diphénols avec des phosphonates de diaryles, selon un rapport molaire de 1,03 à 0,97, à des températures de 230 jusqu'à 320°C, en ce qu'on chasse par distillation en l'espace de 1,5 à 2,5 h les monohydroxyaryles volatils à une pression qui diminue pour passer de 500 à pas moins de 2 mbar, et en ce

qu'on parachève ensuite la réaction, en l'espace de 1 à 2 h, par l'addition de carbonate de diaryle, en des quantités de 0,5 mole-% à 8,5 moles-%, par rapport à la somme molaire du phosphonate de diaryle et du carbonate de diaryle mis en réaction, à des températures de 250 jusqu'a 320°C et à une pression qui diminue de 300 jusqu'à pas moins de 1 mbar à 0,2 mbar.

2. Procédé de préparation de polyphosphonates comportant des structures carbonates en des quantités de 0,5 à 2,5 moles-%, par rapport à la somme des motifs structurels phosphonates et carbonates selon la revendication 1, procédé caractérisé en ce qu'on parachève la réaction par addition de 1 mole-% à 4,9 moles-% de carbonate de diaryle, par rapport à la somme molaire du phosphonate de diaryle et du carbonate de diaryle mis en réaction.

3. Polyphosphonates que l'on peut obtenir selon le procédé des revendications 1 et 2.